# EUROPEAN PATENT SPECIFICATION

(11) **EP 2 053 761 B1**
(45) Date of publication and mention of the grant of the patent: **11.08.2010**
(21) Application number: 07291285.0
(22) Date of filing: 22.10.2007
(51) Int. Cl.: H04W 56/00, H04B 7/26, H04J 3/06

(54) **Synchronization for multicast and broadcast services in a wireless communication system**
Synchronisation für Multicast- und Rundfunkdienste in einem drahtlosen Kommunikationssystem
Synchronisation pour services multidiffusion et radiodiffusion dans un système de communications sans fil

(43) Date of publication of application: 29.04.2009
(73) Proprietor: Alcatel Lucent, 75008 Paris (FR)
(72) Inventor: Fahldieck, Torsten, Dipl.-Ing., 71254 Ditzingen (DE)
(74) Representative: Schmidt, Werner Karl

(56) References cited:
- WO-A-2006/105010
- US-A1- 2005 096 055
- US-B1- 6 680 955
- TAO JIANG; WEIDONG XIANG; HSIAO-HWA CHEN; QIANG NI: "Multicast Broadcast Services Support in OFDMA-Based WiMAX Systems [Advances in Mobile Multimedia]" IEEE COMMUNICATIONS MAGAZINE, [Online] vol. 45, no. 8, August 2007 (2007-08), pages 78-86, XP011190293 IEEE SERVICE CENTER, PISCATAWAY, US ISSN: 0163-6804 Retrieved from the Internet: URL:http://ieeexplore.ieee.org/iel5/35/429 0299/04290318.pdf> [retrieved on 2008-04-22]

## Description

### Technical field

The invention relates to a wireless synchronization for multicast and broadcast services, and more particularly without limitation to a method of wireless synchronization for multicast and broadcast services, to a gateway and to a base station.

### Background and related art

The connection between a wireless terminal and a network element of a wireless wideband communication network is generally established via an air interface. The air interface can be a wireless wideband system compliant with the IEEE 802.16 standard. The wideband wireless systems as WiMax, apart from the unicast communications, may also provide multicast and broadcast services to the wireless terminals. The broadcasting mode uses the network capabilities to send information to all destinations without congesting the network capacity, using either broadcast channels or different routing methods. A more controlled approach is reached using the multicast mode, as it transports the packets to a group of destination simultaneously, delivering the message over each link of the network only once and creating copies only when the link to the destinations split.

The wireless terminals may receive several versions of the same packets within a multicast and broadcast zone from several base station transmitters. The terminals may take advantage of the plurality of packet using the principle of macrodiversity and improving the reception signal of the transmission. One of the disadvantages of these types of connections is that very often the content of these packets are not identical, leading to errors on the macrodiversity reception.

US2005096055A1 describes a method coordinating broadcast parameter settings that enables autonomous soft handoff by a mobile station. The initiating base station assumes the role of an arbitrator and is responsible for determining the broadcast parameters. The broadcast parameter coordination process does not require an intervention by the PDSM, except to inform the mobile station of the soft handoff sectors after the broadcast parameter coordination process is completed.

There is therefore a need for a method of wireless synchronization for multicast and broadcast services, an improved gateway of the wireless wideband system, and an improved base station adapted for performing the method in accordance with the invention.

This object and other objects are solved by the features of the independent claims. Preferred embodiments of the invention are described by the features of the dependent claims.

### Summary of the invention

The present invention provides a method of synchronizing a multicast and broadcast service packet flow on a wireless wideband system, comprising a core network coupled to a gateway, an MBS server coupled to said gateway and a plurality of base stations belonging to an MBS zone. The method comprises the steps of: receiving at least a first MBS packet belonging to the MBS packet flow for transmission to the MBS zone from the core network by the gateway; receiving at least a first sync packet containing a first time stamp by the gateway from the MBS server, the first time stamp being a summation of the time reference and a time offset, the time offset being a maximum delay between the MBS server and the first base station of the plurality of base stations, the first time stamp determining the first MBS packet transmission time; and sending at least the first MBS packet and at least the first sync packet to the plurality of base stations including the first base station by the gateway. The method further comprises comparing at least the first MBS packet transmission time with a plurality of predetermined transmission times of a plurality of downlink frames including a first predetermined transmission time of a first DL frame for identification of a matching between one of the predetermined transmission times of the plurality of downlink frames and the first MBS packet transmission time, by at least the first base station; allocating at least a portion of the first MBS packet into a first downlink frame having the first predetermined transmission time matching the first MBS packet transmission time, by at least the first base station, characterized in that the first MBS packet and the first sync packet are sent as separate packets from the gateway to the plurality of base stations.

The term 'matching' as used herein encompasses only an approximate matching and does not imply a mathematical matching, but finding the best match or the closest match between two numbers that may correspond, for example, to a predetermined transmission time of the downlink frame and a MBS packet transmission time.

One of the advantages of the embodiments is that by synchronizing the content of the downlink frames when using the multicast and broadcast services into an MBS zone, it allows using macrodiversity and performs radio frequency combining, summing the downlink frames coming from the plurality of the base station within the MBS zone.

In accordance with an embodiment of the invention, the downlink frame corresponds to a WiMAX downlink frame. The embodiments are particularly advantageous by synchronizing the multicast and broadcast packets within the WiMax or IEEE 802.16 standard.

In accordance with an embodiment of the invention, the first sync packet further comprises a first sequence number of the first MBS packet. The method further comprises: sending at least a second sync packet and at least a second MBS packet to the plurality of base stations including the first base station from the gateway, the second sync packet containing second time stamp and a second sequence number of the second MBS packet; and comparing at least a second MBS packet transmission time with a plurality of predetermined transmission times of a plurality of downlink frames including the first and the second predetermined transmission times of the first and second DL frames, by at least the first base station. The method further comprises: allocating at least a portion of the second MBS packet into one of the first and second DL frames having the predetermined transmission time substantially matching the MBS packet transmission time, by at least the first base station.

One of the advantages of the embodiments is that it allows synchronizing the multicast and broadcast services independently of the protocol that is being used to implement the MBS service. This provides a time stamp association to an MBS packet flow without extending or modifying existing protocols and protocol stack implementation.

In accordance with an embodiment of the invention, the first sync packet being used during initialization of the MBS packet flow, the first sync packet further comprising: a first header portion of a first RTP packet and an information for identification of an IP and UDP header of the MBS packet flow. The first header portion contains a first RTP time field, and the first RTP packet contains at least the first MBS packet.

In another preferred embodiment the method further comprises: sending at least a second RTP packet including a second MBS packet and a second header portion containing a second RTP time field to the plurality of base stations including the first base station from the gateway; calculating a second MBS packet transmission time by subtracting the second time field from the first RTP time field and adding the first time stamp; comparing at least a second MBS packet transmission time with a plurality of predetermined transmission times of a plurality of downlink frames including the first and the second predetermined transmission times of the first and a second DL frame, by at least the first base station for identification of a matching between one of said predetermined transmission times of said plurality of downlink (DL) frames and said second MBS packet transmission time, by at least said first base station. Another step includes allocating at least a portion of the second MBS packet into one of the first and second DL frames having the predetermined transmission time substantially matching the MBS packet transmission time, by at least the first base station.

One of the advantages of the invention is that it provides a time stamp association to an IP flow without extending or modifying existing protocols and protocol stack implementation. The embodiment only requires to send a first synchronization packet or sync packet during initialization of the MBS packet flow with information regarding identification of the MBS packet flow and the subsequent MBS packet will contain all necessary information so that the receiver is able to be synchronized with the other base station and transmit the downlink frame at the same time.

In another aspect, the invention relates to a gateway for a wireless wideband system, the gateway adapted for receiving and transmitting a multicast and broadcast service packet flow from the core network to a plurality of base stations belonging to an MBS zone. The gateway comprises: means for receiving at least a first MBS packet belonging to the MBS packet flow for transmission to the MBS zone from the core network; means for receiving at least a first sync packet containing a first time stamp from an MBS server. The first time stamp is an addition of the time reference and a time offset, the time offset being a maximum delay between the MBS server and the first base station of the plurality of base stations. The gateway further comprises: means for sending at least the first MBS packet and at least the first sync packet to the plurality of base stations including the first base station for comparison of at least the first MBS packet transmission time with a plurality of predetermined transmission times of a plurality of downlink frames including a first predetermined transmission time of a first DL frame for identification of the matching between one of the predetermined transmission times of the plurality of downlink frames and the first MBS packet transmission time, characterized in that the means for sending are adapted to send the first MBS packet and the first sync packet as separate packets to the plurality of base stations.

An advantage is that the gateway, as is adapted for receiving and transmitting a multicast and broadcast service packet flow, together with the MBS server is able to send a sync packet to the plurality of the base stations that include all the information necessary for synchronizing the content of the downlink frames packets that will be transmitted by the plurality of base stations within the MBS zone. The MBS server may be a separate entity or it may be a part of the gateway.

In another aspect, the invention relates to a base station for a wireless wideband system, the base station being adapted for receiving and transmitting a multicast and broadcast service (MBS) packet flow to at least a portion of an MBS zone. The base station comprises: means for receiving at least a first MBS packet and at least a first sync packet from a gateway. It also comprises means for comparing at least the first MBS packet transmission time with a plurality of predetermined transmission times of the plurality of downlink frames including a first predetermined transmission time of a first DL frame, which serve for identification of a matching between one of the predetermined transmission times of the plurality of downlink frames and the first MBS packet transmission time. The base station further comprises means for allocating at least a portion of the first MBS packet into a first downlink frame having the first predetermined transmission time matching the first MBS packet transmission time, characterized in that the means for receiving are adapted to receive the first MBS packet and the first sync packet as separate packets from the gate way.

One of the advantages of the embodiments is that the base station receives from the gateway the time stamp regarding the necessary information to calculate the transmission times of the MBS packets and with this information is able to allocate the MBS packet in the right downlink frames, so that all the plurality of base stations belonging to an MBS zone transmit the same content of downlink frames to the receivers within the MBS zone.

In a further embodiment, the first sync packet further comprises a first sequence number of the first MBS packet. The method further comprises: means for receiving at least a second sync packet and at least a second MBS packet from the gateway, the second sync packet containing a second time stamp and a second sequence number of the second MBS packet. The base station also includes means for comparing at least a second MBS packet transmission time with a plurality of predetermined transmission times of a plurality of downlink frames including the first and the second predetermined transmission times of the first and the second DL frames for identification of a matching between one of said predetermined transmission times of said plurality of downlink (DL) frames and said second MBS packet transmission time, by at least said first base station; and means for allocating at least a portion of the second MBS packet into one of the first and second DL frames having the predetermined transmission time substantially matching the MBS packet transmission time.

In a further preferred embodiment, the first sync packet is used during the initialization of the MBS packet flow, the first sync packet further comprises: a first header portion of a first RTP packet and an information for identification of an IP and UDP header of the MBS packet flow, the first header portion contains a first RTP time field, and the first RTP packet contains at least a first MBS packet.

In a preferred embodiment a base station further comprises means for receiving at least a second RTP packet including a second MBS packet and a second header portion containing a second RTP time field from the gateway; means for calculating a second MBS packet transmission time by subtracting the second RTP time field from the first RTP time field and adding the first time stamp. The base station further comprises: means for comparing at least a second MBS packet transmission time with a plurality of predetermined transmission times of a plurality of downlink frames including the first and second predetermined transmission times of the first and of second DL frames, that serves for identification of a matching between one of said predetermined transmission times of said plurality of downlink (DL) frames and said second MBS packet transmission time, by at least said first base station. The base station includes: means for allocating at least a portion of the second MBS packet into one of the first and second DL frames having the predetermined transmission time substantially match the MBS packet transmission time.

### Brief description of the drawings

In the following preferred embodiments of the invention will be described in greater detail by way of example only making reference to the drawings in which:
- Figure 1: is a block diagram of the prior art,
- Figure 2: is a block diagram of a wireless synchronization for broadcast and multicast service according to a first preferred embodiment of the invention,
- Figure 3: is a block diagram of a wireless synchronization for broadcast and multicast service according to a second preferred embodiment of the invention,
- Figure 4: is a block diagram of a wireless synchronization for broadcast and multicast service according to a third preferred embodiment of the invention

### Detailed description

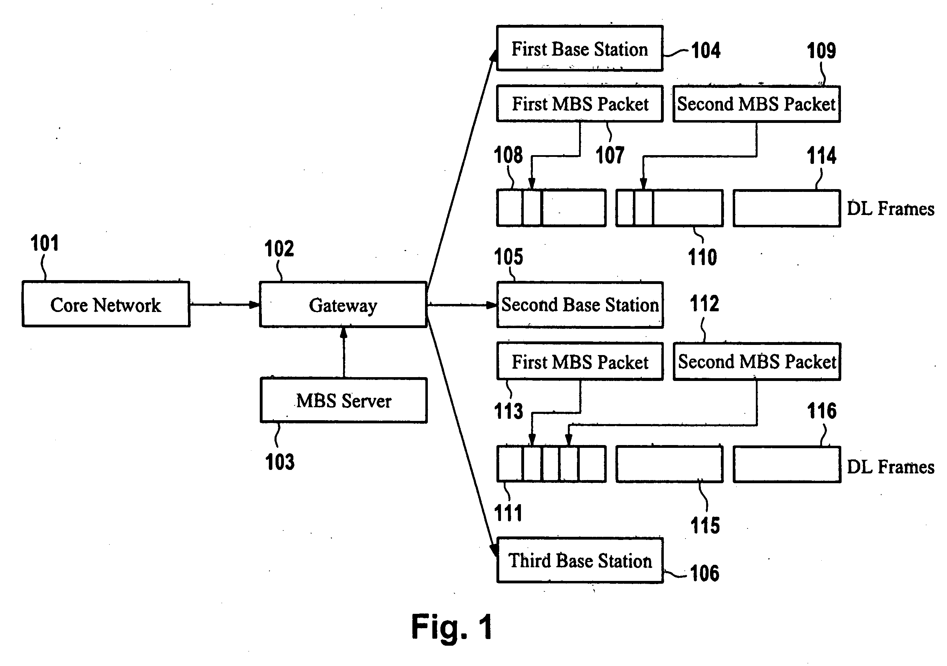

Fig. 1 shows the prior art of a wireless wideband system and a multicast and broadcast service packet flow transmission. The wireless wideband system comprises a core network 101 that is coupled to a gateway 102, the gateway 102 is coupled to an MBS server 103. The gateway 102 is connected to a first, second and third base station 103, 104 and 105. By a multicast and broadcast service transmission, the core network sends a flow of MBS packet to be transmitted to the MBS zone. The gateway 102 receives copies the MBS packets and sends it to the plurality of base stations including first, second and third base station 104, 105 and 106. Due to the nature of a packetized transports, an MBS packet may have different delays when it is transmitted from the gateway 102 to a particular base station, due for example to an internal processing of the gateway or congestion in the system. The copies of the first MBS packet may arrive to each of the base stations at different times. Due to the different packet delays, the base stations may allocate the MBS packets in different downlink frames. The fig. 1 shows the first base station 104 allocating the first and second MBS packet 107, 109 into the first downlink frame 108, where as the second base station 105 allocates both the first and second packet 111, 115 into the first DL frame 111. A terminal within the MBS zone will receive the first downlink frames 108 and 111 with different contents, so that it will not be able to use the radio frequency combining as the content of both frames are different.

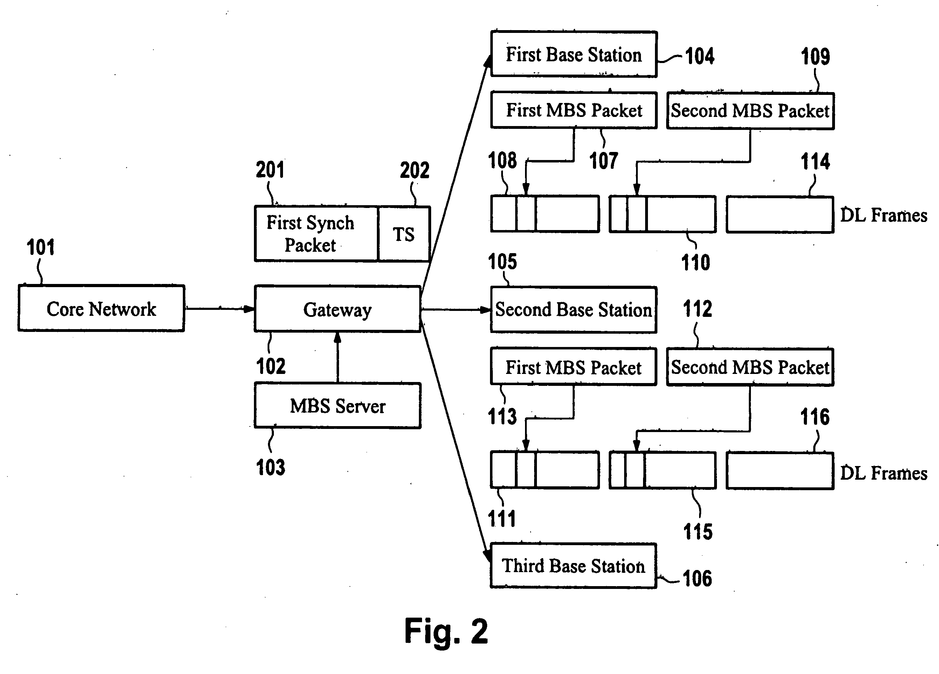

Fig. 2 illustrates a wireless wideband system and a service for a multicast and broadcast packet flow comprising a core network 101, a gateway 102 coupled to the core network and an MBS server 103 coupled to the gateway 102. The gateway 102 is also connected to a first, second and third base station 104, 105, 106 that are adapted for transmitting the MBS packet flow to an MBS zone. When an MBS packet flow transmission is initiated, the core network 101 sends a first MBS packet belonging to the MBS packet flow for transmission to the MBS zone by the plurality of base stations. The gateway 102 receives the at least first MBS packet and a first sync packet 201 from MBS server. This first sync packet contains the first time stamp 202 that is a summation of a time reference and a time offset, the time offset being maximum time delay between the MBS server and a base station. The time stamp determines the first MBS packet transmission time.

The gateway 102 sends copies of the first MBS packet and the first sync packet 201 to the plurality of base stations including the first, second and third base station 104, 105, 106. When the first base station 104 receives a first MBS packet 107 and the first sync packet 201, it compares at least the first MBS packet transmission time located in the first sync packet with a plurality of predetermined transmission times of the plurality of downlink frames as 108, 110, 114. The comparison allows the first base station finding the best match to allocate the first MBS packet, by matching the closest transmission time of any of the downlink frames with the MBS packet transmission time. When the best match has been calculated, the first MBS packet will be allocated within a DL frame that in the fig. 2 corresponds to the first DL frame 108.

Subsequently, a second base station receives the first MBS packet 113 and a copy of the first sync packet 201 and uses the same comparison algorithm as the first base station 104 finding the best match to allocate the first MBS packet 113 into one of the plurality of downlink frames including 111, 115 and 116. At least the first and the second base station 104, 105 receive the same time stamp 202, and the first MBS packet transmission time, independently of the delays of the packets to arrive to each base station, the algorithm allocates the first MBS packet into the same downlink frame, as depicted by fig. 2.

A second MBS packet that is sent by the gateway 102 to at least the first and second base station 104, 105 is allocated into the correspondent downlink frame (DL) by at least first and second base station. As fig. 2 shows, it allocates the second MBS packet into the downlink frame 110 and 115, respectively. As the content of the downlink frames for at least both base stations 104, 105 are identical, and as the downlink frame has a predetermined transmission time, the receiver within the MBS zone is able to take advantage of the frequency radio combining used within the macrodiversity and summing up the downlink frames from the plurality of base stations.

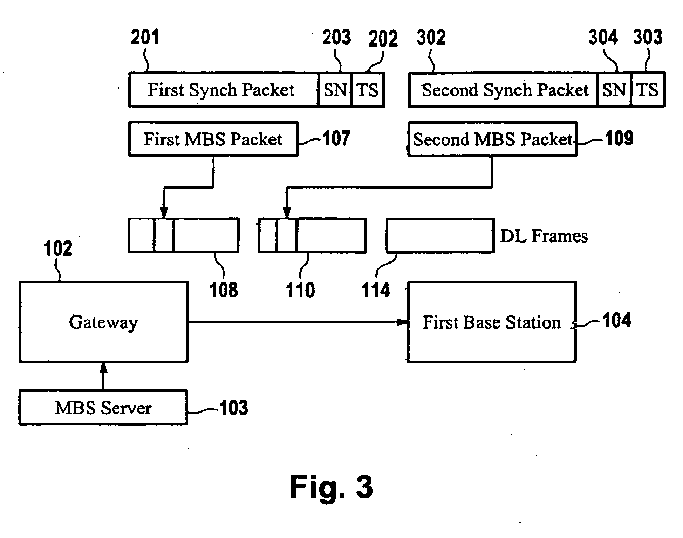

Fig. 3 illustrates the communication between a gateway 102, an MBS server 103 and a first base station 104. When the transmission of a multicast and broadcast service is initiated, the gateway sends a first MBS packet 107 and a first sync packet 201 to a plurality of base stations including the first base station 104. This first sync 201 packet includes a time stamp 202 and further comprises a sequence number 203 of the first MBS packet 107, so that the sync packet is linked to the first MBS packet 107 and correctly interpreted by the first base station 104. Subsequently, the gateway 202 sends a second MBS packet 109 and a second sync packet 302 to the plurality of base stations including the first base station 104.

The second sync packet 302 further comprises a second time stamp 303 and a second sequence number 304. The sequence number 304 is related to the second MBS packet 109 and the time stamp 303 contains the MBS packet transmission time of the second MBS packet 109. The first base station 104 compares the first MBS packet transmission time with the plurality of predetermined transmission times of the downlink frames in order to find the best match between both transmission times. Subsequently, it allocates the MBS packet into the best downlink frame that in the case of fig. 2 corresponds to the downlink frame 108. The first base station 104 compares the second MBS packet transmission time located in the second sync packet 302 with the plurality of predetermined transmission times including the downlink frames 108, 110 and 114. When the best match between the transmission times of the second MBS packet and one of the plurality of downlink frames has been calculated, the first base station 104 allocates the second MBS packet 109 into the adequate downlink frame 110. After all the MBS packets have been allocated into the plurality of downlink frames, the base station transmits the downlink frames using the predetermined transmission times to at least a portion of the MBS zone.

One of the advantages of the embodiments is that allows synchronizing the content of the plurality of downlink frames to be transmitted by the plurality of base stations, so that a receiver or terminal within an MBS zone may use the frequency radio combining technique, adding and receiving data from more than one sender. This synchronization is achieved using a sync packet flow that contains a time stamp related to the plurality of MBS packets, so that each base station is able to allocate the MBS packet in the same order and position into the downlink frames. Another advantage is that the multicast and broadcast service is able to synchronize the content or payload of the plurality of downlink frames without further modification of the existing protocols and the protocol stack implementation, as there is no change within the MBS packet and only an additional IP flow is sent by the gateway. As the bandwidth consumption of the time stamp flow is low related to the bandwidth consumption of the MBS flow, there is a minimum loss within the multicast and broadcast service transmission. Furthermore, this mechanism is fully transferred to the upper layer protocols.

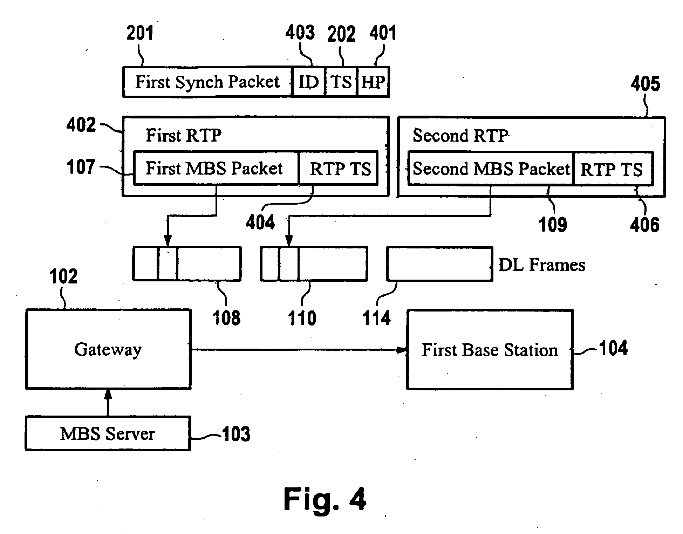

Fig. 4 illustrates the communication between a gateway 102, the first base station 104 and an MBS server 103. Under transmission of a multicast and broadcast service to an MBS zone, the gateway 102 sends a first MBS packet 107 and a first sync packet 201 to the first base station 104. The first MBS packet contains the data to be allocated within the downlink frames. The first sync packet 201 is used during initialization of the MBS packet flow and it further comprises a first header portion of the first RTP packet 401 and information for identification of an IP and UDP header of the MBS packet flow 403. The first RTP packet 402 contains the first MBS packet 107 and a first RTP time field 404. When the first base station 104 receives the first MBS packet 107 within in the first RTP packet 402 and the first sync packet 201, it compares the first MBS packet's transmission time with predetermined transmission times of the plurality of downlink frames. The comparison is used for identification of a matching between one of the predetermined transmission times and the first MBS packet transmission time. Then, the first base station allocates at least a portion of the first MBS packet into a first downlink frame having the first predetermined transmission time matching the first MBS packet transmission time.

Subsequently, the gateway 102 may send at least second RTP packet 405 including the second MBS packet 109 and the second RTP time field 406. When the first base station receives this second RTP packet 405, it calculates a second MBS packet transmission time by subtracting the second RTP time field 406 from the first RTP time field 404 and adding the first time stamp 202. With this second MBS packet transmission time, it compares with the plurality of predetermined transmission times of the plurality of downlink frames for identification of a matching between one of the predetermined transmission times and the second MBS packet transmission time. When the best matching is obtained, it allocates at least a portion of the second MBS packet into one of the first and second DL frames having the predetermined transmission time substantially matching the closest MBS packet transmission time.

One of the advantages of the embodiments is that the synchronization of the payload of the plurality of the downlink frames, within the plurality of base stations within an MBS zone, is achieved by using the time field already existing within the RTP packets. It only requires sending one a synchronization packet in order to obtain all the information to identify the MBS packet flow and calculate the subsequent transmission times of the MBS packets. This provides time stamp association of the MBS packet flows and the downlink frames without modifying existing protocols as the RTP packets. As the MBS packet flow typically contains large IP packets of the maximum MTU size, the bandwidth consumption of the time stamp flow is low related to the bandwidth consumption of the MBS packet flow.

### List of Reference Numerals

| | |
|---|---|
| 101 | Core Network |
| 102 | Gateway |
| 103 | MBS Server |
| 104 | First Base Station |
| 105 | Second Base Station |
| 106 | Third Base Station |
| 107 | First MBS Packet |
| 108 | First DL Frame |
| 109 | Second MBS Packet |
| 110 | Second DL Frame |
| 111 | First DL Frame |
| 112 | Second MBS Packet |
| 113 | First MBS Packet |
| 114 | Third DL Frame |
| 115 | Second DL Frame |
| 116 | Third DL Frame |
| 201 | First Sync Packet |
| 202 | First Time Stamp |
| 203 | First Sequence Number |
| 302 | Second Sync Packet |
| 303 | Second Time Stamp |
| 304 | Second Sequence Number |
| 401 | Header Portion |
| 402 | First RTP |
| 403 | Identification Information |
| 404 | First RTP Time Stamp |
| 405 | Second RTP |
| 406 | Second RTP Time Stamp |

## Claims

1. A method of synchronizing a multicast and broadcast service MBS packet flow on a wireless wideband system, comprising a core network coupled to a gateway, a MBS server coupled to said gateway and a plurality of base stations belonging to a MBS zone, said method comprising the steps of:
- receiving at least a first MBS packet (107) belonging to said MBS packet flow for transmission to said MBS zone from said core network (101) by said gateway (102);
- receiving at least a first sync packet (201) containing a first time stamp (202) by said gateway (102) from said MBS server (103), said first time stamp (202) being a summation of a time reference and a time offset, said time offset being a maximum time delay between said MBS server (103) and a first base station (104) of said plurality of base stations, said first time stamp (202) determining a first MBS packet transmission time;
- sending at least said first MBS packet (107) and at least said first sync packet (201) to said plurality of base stations including said first base station (104) by said gateway (102);
- comparing at least said first MBS packet transmission time with a plurality of predetermined transmission times of a plurality of downlink DL frames including a first predetermined transmission time of a first DL frame (108) for identification of a matching between one of said predetermined transmission times of said plurality of downlink DL frames and said first MBS packet transmission time, by at least said first base station (104); and
- allocating at least a portion of said first MBS packet (107) into a first downlink DL frame (108) having said first predetermined transmission time matching said first MBS packet transmission time, by at least said first base station (104), **characterized in that** the first MBS packet (107) and the first sync packet (201) are sent as separate packets from the gateway (102) to the plurality of base stations.

2. The method as in claim 1, wherein said downlink Frame corresponds to a IEEE 802.16 downlink Frame.

3. A method as in claim 1, wherein said first sync packet (201) further comprises a first sequence number of said first MBS packet (107), said method further comprising:
- sending at least a second sync packet and at least a second MBS packet (109) to said plurality of base stations including said first base station (104) from said gateway (102), said second sync packet containing a second time stamp and a second sequence number of said second MBS packet (109);
- comparing at least a second MBS packet transmission time with a plurality of predetermined transmission times of a plurality of downlink DL frames including said first and a second predetermined transmission times of said first and a second DL frames, by at least said first base station;
- allocating at least a portion of said second MBS packet (109) into one of said first and second DL frame having said predetermined transmission time substantially matching said MBS packet transmission time, by at least said first base station (104).

4. A method as in claim 1, wherein said first sync packet being used during initialization of said MBS packet flow, said first sync packet further comprising: a first header portion of a first RTP packet and an information for identification of an IP and UDP header of said MBS packet flow, said first header portion containing a first RTP time field, said first RTP packet containing at least said first MBS packet.

5. A method as in claim 4 further comprising:
- sending at least a second RTP packet (405) including a second MBS packet (109) and a second header portion (406) containing a second RTP time field to said plurality of base stations including said first base station (104) from said gateway (102);
- calculating a second MBS packet transmission time by subtracting said second RTP time field from said first RTP time field and adding said first time stamp;
- comparing at least a second MBS packet transmission time with a plurality of predetermined transmission times of a plurality of downlink DL frames including said first and second predetermined transmission times of said first and a second DL frames, by at least said first base station (104) for identification of a matching between one of said predetermined transmission times of said plurality of downlink DL frames and said second MBS packet transmission time, by at least said first base station (104);
- allocating at least a portion of said second MBS packet into one of said first and second DL frame having said predetermined transmission time substantially matching said MBS packet transmission time, by at least said first base station.

6. A gateway (102) for a wireless wideband system, said gateway being adapted for receiving and transmitting a multicast and broadcast service MBS packet flow from a core network to a plurality of base stations belonging to a MBS zone, said gateway (102) comprising:
- means for receiving at least a first MBS packet (107) belonging to said MBS packet flow for transmission to said MBS zone from said core network (101);
- means for receiving at least a first sync packet (201) containing a first time stamp (202) from a MBS server (103), said first time stamp (202) being an addition of a time reference and a time offset, said time offset being a maximum time delay between said MBS server (103) and a first base station (104) of said plurality of base stations; and
- means for sending at least said first MBS packet (107) and at least said first sync packet (201) to said plurality of base stations including said first base station (104) for comparison of at least said first MBS packet transmission time with a plurality of predetermined transmission times of a plurality of downlink DL frames including a first predetermined transmission time of a first DL frame for identification of a matching between one of said predetermined transmission times of said plurality of downlink DL frames and said first MBS packet transmission time
**characterized in that** the means for sending are adapted to send the first MBS packet (107) and the first sync packet (201) as separate packets to the plurality of base stations.

7. A base station for a wireless wideband system, said base station being adapted for receiving and transmitting a multicast and broadcast service MBS packet flow to at least a portion of a MBS Zone, said base station comprising:
- means for receiving at least a first MBS packet (107) and at least a first sync packet (201) from a gateway (102);
- means for comparing at least said first MBS packet transmission time with a plurality of predetermined transmission times of a plurality of downlink DL frames including a first predetermined transmission time of a first DL frame for identification of a matching between one of said predetermined transmission times of said plurality of downlink DL frames and said first MBS packet transmission time; and
- means for allocating at least a portion of said first MBS packet (107) into a first downlink DL frame having said first predetermined transmission time matching said first MBS packet transmission time,
**characterized in that** the means for receiving are adapted to receive the first MBS packet (107) and the first sync packet (201) as separate packets from the gateway (102).

8. A base station as in claim 7, wherein said first sync packet (201) further comprises a first sequence number of said first MBS packet, said method further comprising:
- means for receiving at least a second sync packet (302) and at least a second MBS packet (109) from said gateway (102), said second sync packet containing a second time stamp and a second sequence number of said second MBS packet (109);
- means for comparing at least a second MBS packet transmission time with a plurality of predetermined transmission times of a plurality of downlink DL frames including said first and a second predetermined transmission times of said first (108) and a second DL frames for identification of a matching between one of said predetermined transmission times of said plurality of downlink DL frames and said second MBS packet transmission time, by at least said first base station;
- means for allocating at least a portion of said second MBS packet into one of said first and second DL frame having said predetermined transmission time substantially matching said MBS packet transmission time.

9. A base station as in claim 7, wherein said first sync packet further comprising: a first header portion of a first RTP packet and an information for identification of an IP and UDP header of said MBS packet flow, said first header portion containing a first RTP time field, said first RTP packet containing at least said first MBS packet.

10. A base station as in claim 9 further comprising:
- means for receiving at least a second RTP packet including a second MBS packet (112) and a second header portion containing a second RTP time field from said gateway;
- means for calculating a second MBS packet transmission time by subtracting said second RTP time field from said first RTP time field and adding said first time stamp;
- means for comparing at least a second MBS packet transmission time with a plurality of predetermined transmission times of a plurality of downlink DL frames including said first and second predetermined transmission times of said first and a second DL frames for identification of a matching between one of said predetermined transmission times of said plurality of downlink DL frames and said second MBS packet transmission time, by at least said first base station;
- means for allocating at least a portion of said second MBS packet (109) into one of said first and second DL frame having said predetermined transmission time substantially matching said MBS packet transmission time.

## Patentansprüche

1. Ein Verfahren zur Synchronisation eines Multicast- und Rundfunkdienst MBS-Paketflusses auf einem drahtlosen Breitbandsystem mit einem an ein Gateway gekoppeltes Kernnetzwerk, einem an das besagte Gateway gekoppelten MBS-Server und einer Mehrzahl von Basisstationen, welcher zu einer MBS-Zone gehören, wobei das besagte Verfahren die folgenden Schritte umfasst:
- Empfangen mindestens eines ersten MBS-Pakets (107), welches zu dem besagten MBS-Paketfluss gehört, für die Übertragung durch das besagte Gateway (102) von dem besagten Kernnetzwerk (101) an die besagte MBS-Zone;
- Empfangen, an dem besagten Gateway (102), mindestens eines ersten Sync-Pakets (201) mit einem ersten Zeitstempel (202) von dem besagten MBS-Server, wobei der besagte erste Zeitstempel (202) eine Summierung einer Zeitreferenz und eines Zeitversatzes ist, wobei der besagte Zeitversatz eine maximale Zeitverzögerung zwischen dem besagten MBS-Server (103) und einer ersten Basisstation (104) der besagten Mehrzahl von Basisstationen ist, wobei der besagte erste Zeitstempel (202) eine Übertragungszeit für das erste MBS-Paket bestimmt;
- Senden, durch das besagte Gateway (102), mindestens des besagten ersten MBS-Pakets (107) und mindestens des besagten ersten Sync-Pakets (201) an die besagte Mehrzahl von Basisstationen, einschließlich der besagten ersten Basisstation (104);
- Vergleichen der Übertragungszeit mindestens des besagten ersten MBS-Pakets mit einer Mehrzahl von vorbestimmten Übertragungszeiten einer Mehrzahl von Downlink DL-Rahmen, einschließlich einer ersten vorbestimmten Übertragungszeit eines ersten DL-Rahmens (108), zur Identifikation einer Übereinstimmung zwischen einer der besagten vorbestimmten Übertragungszeiten der besagten Mehrzahl von Downlink DL-Rahmen und der Übertragungszeit des besagten ersten MBS-Pakets durch mindestens die besagte erste Basisstation (104); und
- Zuordnen mindestens eines Abschnitts des besagten MBS-Pakets (107) zu einem ersten Downlink DL-Rahmen (108), dessen besagte erste vorbestimmte Übertragungszeit mit der Übertragungszeit des besagten ersten MBS-Pakets übereinstimmt, durch die besagte mindestens erste Basisstation (104), **dadurch gekennzeichnet, dass** das erste MBS-Paket (107) und das erste Sync-Paket (201) als separate Pakete von dem Gateway (102) an die Mehrzahl von Basisstationen gesendet werden.

2. Das Verfahren nach Anspruch 1, wobei der besagte Downlink-Rahmen einem IEEE 802.15-Downlink-Rahmen entspricht.

3. Ein Verfahren nach Anspruch 1, wobei das besagte erste Sync-Paket (201) weiterhin eine erste Sequenznummer des besagten ersten MBS-Pakets enthält, wobei das Verfahren weiterhin umfasst:
- Senden mindestens eines zweiten Sync-Pakets und mindestens eines zweiten MBS-Pakets (109) an die besagte Mehrzahl von Basisstationen, einschließlich der besagten ersten Basisstation (104), von dem besagten Gateway (102), wobei das besagte zweite Sync-Paket einen zweiten Zeitstempel und eine zweite Sequenznummer des besagten zweiten MBS-Pakets (109) enthält;
- Vergleichen der Übertragungszeit mindestens eines zweiten MBS-Pakets mit einer Mehrzahl von vorbestimmten Übertragungszeiten einer Mehrzahl von Downlink DL-Rahmen, einschließlich der besagten ersten und einer zweiten vorbestimmten Übertragungszeit des besagten ersten und eines zweiten DL-Rahmens, durch mindestens die besagte erste Basisstation;
- Zuordnen mindestens eines Abschnitts des besagten zweiten MBS-Pakets (109) entweder zu dem besagten ersten oder dem besagten zweiten DL-Rahmen, dessen besagte vorbestimmte Übertragungszeit im Wesentlichen mit der Übertragungszeit des besagten MBS-Pakets übereinstimmt, durch die besagte mindestens erste Basisstation (104).

4. Ein Verfahren nach Anspruch 1, wobei das besagte erste Sync-Paket während der Initialisierung des besagten MBS-Paketflusses verwendet wird, wobei das besagte erste Sync-Paket weiterhin umfasst: Einen ersten Kopfteilabschnitt eines ersten RTP-Pakets und eine Information für die Identifikation eines IP- und UDP-Kopfteils des besagten MBS-Paketflusses, wobei der besagte erste Kopfteilabschnitt ein erstes RTP-Zeitfeld enthält, wobei das besagte erste RTP-Paket mindestens das besagte erste MBS-Paket enthält.

5. Ein Verfahren nach Anspruch 4, weiterhin umfassend:
- Senden mindestens eines zweiten RTP-Pakets (405) mit einem zweiten MBS-Paket (109) und einem zweiten Kopfteilabschnitt (406), welcher ein zweites RTP-Zeitfeld enthält, an die besagte Mehrzahl von Basisstationen, einschließlich der besagten ersten Basisstation (104), von dem besagten Gateway (102);
- Berechnen der Übertragungszeit eines zweiten MBS-Pakets durch Subtrahieren des besagten zweiten RTP-Zeitfelds von dem besagten ersten RTP-Zeitfeld und Hinzufügen des besagten ersten Zeitstempels;
- Vergleichen der Übertragungszeit mindestens eines zweiten MBS-Pakets mit einer Mehrzahl von vorbestimmten Übertragungszeiten einer Mehrzahl von Downlink DL-Rahmen, einschließlich der besagten ersten und zweiten vorbestimmten Übertragungszeit des besagten ersten und eines zweiten DL-Rahmens, durch zumindest die besagte erste Basisstation (104) für die Identifikation einer Übereinstimmung zwischen einer der besagten vorbestimmten Übertragungszeiten der besagten Mehrzahl von Downlink DL-Rahmen und der Übertragungszeit des besagten zweiten MBS-Pakets, durch zumindest die besagte erste Basisstation (104);
- Zuordnen mindestens eines Abschnitts des besagten zweiten MBS-Pakets zu entweder dem besagten ersten oder dem besagten zweiten DL-Rahmen, dessen besagte vorbestimmte Übertragungszeit im Wesentlichen mit der Übertragungszeit des besagten MBS-Pakets übereinstimmt, durch zumindest die besagte erste Basisstation.

6. Ein Gateway (102) für ein drahtloses Breitbandsystem, wobei das besagte Gateway dazu ausgelegt ist, einen Multicast- und Rundfunkdienst MBS-Paketfluss von einem Kernnetzwerk zu empfangen und an eine Mehrzahl von Basisstationen, welche einer MBS-Zone angehören, zu übertragen, wobei das besagte Gateway (102) umfasst:
- Mittel zum Empfangen mindestens eines ersten MBS-Pakets (107), welches zu dem besagten MBS-Paketfluss gehört, für die Übertragung von dem besagten Kernnetzwerk (101) an die besagte MBS-Zone;
- Mittel zum Empfangen mindestens eines ersten Sync-Pakets (201) mit einem ersten Zeitstempel (202) von einem MBS-Server, wobei der besagte erste Zeitstempel (202) eine Addition einer Zeitreferenz und eines Zeitversatzes ist, wobei der besagte Zeitversatz eine maximale Zeitverzögerung zwischen dem besagten MBS-Server (103) und einer ersten Basisstation (104) der besagten Mehrzahl von Basisstationen ist; und
- Mittel zum Senden mindestens des besagten ersten MBS-Pakets (107) und mindestens des besagten ersten Sync-Pakets (201) an die besagte Mehrzahl von Basisstationen, einschließlich der besagten ersten Basisstation (104), um die Übertragungszeit mindestens des besagten ersten MBS-Pakets mit einer Mehrzahl von vorbestimmten Übertragungszeiten einer Mehrzahl von Downlink DL-Rahmen, einschließlich einer ersten vorbestimmten Übertragungszeit eines ersten DL-Rahmens, zu vergleichen, um eine Übereinstimmung zwischen einer der besagten vorbestimmten Übertragungszeiten der besagten Mehrzahl von Downlink DL-Rahmen und der Übertragungszeit des besagten ersten MBS-Pakets zu identifizieren,
**dadurch gekennzeichnet, dass** die Mittel zum Senden dazu ausgelegt sind, das erste MBS-Paket (107) und das erste Sync-Paket (201) als separate Pakete an die Mehrzahl von Basisstationen zu senden.

7. Eine Basisstation für ein drahtloses Breitbandsystem, wobei die besagte Basisstation dazu ausgelegt ist, einen Multicast- und Rundfunkdienst-MBS-Paketfluss zu empfangen und an zumindest einen Abschnitt einer MBS-Zone zu übertragen, wobei die besagte Basisstation umfasst:
- Mittel zum Empfangen mindestens eines ersten MBS-Pakets (107) und mindestens eines ersten Sync-Pakets (201) von einem Gateway (102);
- Mittel zum Vergleichen der Übertragungszeit mindestens des besagten ersten MBS-Pakets mit einer Mehrzahl von vorbestimmten Übertragungszeiten einer Mehrzahl von Downlink DL-Rahmen, einschließlich einer ersten vorbestimmten Übertragungszeit eines ersten DL-Rahmens, zur Identifikation einer Übereinstimmung zwischen einer der besagten vorbestimmten Übertragungszeiten der besagten Mehrzahl von Downlink DL-Rahmen und der Übertragungszeit des besagten ersten MPB-Pakets; und
- Mittel zum Zuordnen mindestens eines Abschnitts des besagten ersten MBS-Pakets (107) zu einem ersten Downlink DL-Rahmen, dessen besagte erste vorbestimmte Übertragungszeit mit der Übertragungszeit des besagten ersten MBS-Pakets übereinstimmt,
**dadurch gekennzeichnet, dass** die Mittel zum Empfangen dazu ausgelegt sind, das erste MBS-Paket (107) und das erste Sync-Paket (201) als separate Pakete von dem Gateway (102) zu empfangen.

8. Eine Basisstation nach Anspruch 7, wobei das besagte erste Sync-Paket (201) weiterhin eine erste Sequenznummer des besagten ersten MBS-Pakets umfasst, wobei die besagte Basisstation weiterhin umfasst:
- Mittel zum Empfangen mindestens eines zweiten Sync-Pakets (302) und mindestens eines zweiten MBS-Pakets (109) von dem besagten Gateway (102), wobei das besagte zweite Sync-Paket einen zweiten Zeitstempel und eine zweite Sequenznummer des besagten zweiten MBS-Pakets (109) enthält;
- Mittel zum Vergleichen der Übertragungszeit mindestens eines zweiten MBS-Pakets mit einer Mehrzahl von vorbestimmten Übertragungszeiten einer Mehrzahl von Downlink DL-Rahmen, einschließlich der besagten ersten und einer zweiten vorbestimmten Übertragungszeit des besagten ersten (108) und eines zweiten DL-Rahmens, für die Identifikation einer Übereinstimmung zwischen einer der besagten vorbestimmten Übertragungszeiten der besagten Mehrzahl von Downlink DL-Rahmen und der Übertragungszeit des besagten zweiten MBS-Pakets, durch mindestens die besagte erste Basisstation;
- Mittel zum Zuordnen mindestens eines Abschnitts des besagten zweiten MBS-Pakets entweder zu dem besagten ersten oder dem besagten zweiten DL-Rahmen, dessen besagte vorbestimmte Übertragungszeit im Wesentlichen mit der Übertragungszeit des besagten MBS-Paket übereinstimmt.

9. Eine Basisstation nach Anspruch 7, wobei das besagte erste Sync-Paket weiterhin umfasst: einen ersten Kopfteilabschnitt eines ersten RTP-Pakets und eine Information für die Identifikation eines IP- und UDP-Kopfteils des besagten MBS-Paketflusses, wobei der besagte erste Kopfteilabschnitt ein erstes RTP-Zeitfeld enthält, wobei das besagte erste RTP-Paket mindestens das besagte erste MBS-Paket enthält.

10. Eine Basisstation nach Anspruch 9, weiterhin umfassend:
- Mittel zum Empfangen mindestens eines zweiten RTP-Pakets mit einem zweiten MBS-Paket (112) und einem zweiten Kopfteilabschnitt, welcher ein zweites RTP-Zeitfeld enthält, von dem besagten Gateway;
- Mittel zum Berechnen der Übertragungszeit eines zweiten MBS-Pakets durch Subtrahieren des besagten zweiten RTP-Zeitfelds von dem besagten ersten RTP-Zeitfeld, und Hinzufügen des besagten ersten Zeitstempels;
- Mittel zum Vergleichen der Übertragungszeit mindestens eines zweiten MBS-Pakets mit einer Mehrzahl von vorbestimmten Übertragungszeiten einer Mehrzahl von Downlink DL-Rahmen, einschließlich der besagten ersten und zweiten vorbestimmten Übertragungszeit des besagten ersten und eines zweiten DL-Rahmens, zur Identifikation einer Übereinstimmung zwischen einer der besagten vorbestimmten Übertragungszeiten der besagten Mehrzahl von Downlink DL-Rahmen und der Übertragungszeit des besagten zweiten MBS-Pakets, durch zumindest die besagte erste Basisstation;
- Mittel zum Zuordnen mindestens eines Abschnitts des besagten zweiten MBS-Pakets (109) zu entweder dem besagten ersten oder dem besagten zweiten DL-Rahmen, dessen besagte vorbestimmte Übertragungszeit im Wesentlichen mit der Übertragungszeit des besagten MBS-Pakets übereinstimmt.

## Revendications

1. Procédé de synchronisation d'un flux de paquets de service de diffusion et multidiffusion MBS sur un système sans fil à large bande, comprenant un coeur de réseau couplé à une passerelle, un serveur MBS couplé à ladite passerelle et une pluralité de stations de base appartenant à une zone MBS, ledit procédé comprenant les étapes suivantes :
- la réception d'au moins un premier paquet MBS (107) appartenant audit flux de paquets MBS pour une transmission à ladite zone MBS depuis ledit coeur de réseau (101) par ladite passerelle (102) ;
- la réception d'au moins un premier paquet de synchronisation (201) contenant une première estampille temporelle (202) par ladite passerelle (102) depuis ledit serveur MBS (103), ladite première estampille temporelle (202) étant une sommation d'une référence temporelle et d'un décalage temporel, ledit décalage temporel étant un retard temporel maximal entre ledit serveur MBS (103) et une première station de base (104) de ladite pluralité de stations de base, ladite première estampille temporelle (202) déterminant un premier temps de transmission de paquet MBS ;
- l'envoi d'au moins ledit premier paquet MBS (107) et d'au moins ledit premier paquet de synchronisation (201) à ladite pluralité de stations de base comprenant ladite première station de base (104) par ladite passerelle (102) ;
- la comparaison d'au moins ledit premier temps de transmission de paquet MBS avec une pluralité de temps de transmission prédéterminés d'une pluralité de trames DL descendantes comprenant un premier temps de transmission prédéterminé d'une première trame DL (108) pour l'identification d'une correspondance entre l'un desdits temps de transmission prédéterminés de ladite pluralité de trames DL descendantes et ledit premier temps de transmission de paquet MBS, par au moins ladite première station de base (104) ; et
- l'attribution d'au moins une portion dudit premier paquet MBS (107) dans une première trame DL descendante (108) dont ledit premier temps de transmission prédéterminé correspond audit premier temps de transmission de paquet MBS, par au moins ladite première station de base (104), **caractérisé en ce que** le premier paquet MBS (107) et le premier paquet de synchronisation (201) sont envoyés en paquets séparés de la passerelle (102) à la pluralité de stations de base.

2. Procédé selon la revendication 1, dans lequel ladite trame descendante correspond à une trame descendante IEEE 802.16.

3. Procédé selon la revendication 1, dans lequel ledit premier paquet de synchronisation (201) comprend en outre un premier numéro de séquence dudit premier paquet MBS (107), ledit procédé comprenant en outre :
- l'envoi d'au moins un second paquet de synchronisation et d'au moins un second paquet MBS (109) à ladite pluralité de stations de base comprenant ladite première station de base (104) depuis ladite passerelle (102), ledit second paquet de synchronisation contenant une seconde estampille temporelle et un second numéro de séquence dudit second paquet MBS (109) ;
- la comparaison d'au moins un second temps de transmission de paquet MBS avec une pluralité de temps de transmission prédéterminés d'une pluralité de trames DL descendantes comprenant lesdits premier et second temps de transmission prédéterminés desdites première et seconde trames DL, par au moins ladite première station de base ;
- l'attribution d'au moins une portion dudit second paquet MBS (109) dans l'une desdites première et seconde trames DL dont ledit temps de transmission prédéterminé correspond sensiblement audit temps de transmission du paquet MBS, par au moins ladite première station de base (104).

4. Procédé selon la revendication 1, dans lequel ledit premier paquet de synchronisation est utilisé durant l'initialisation dudit flux de paquets MBS, ledit premier paquet de synchronisation comprenant : une première portion d'en-tête d'un premier paquet RTP et une information d'identification d'un en-tête IP et UDP dudit flux de paquets MBS, ladite première portion d'en-tête contenant un premier champ temporel RTP, ledit premier paquet RTP contenant au moins ledit premier paquet MBS.

5. Procédé selon la revendication 4, comprenant en outre :
- l'envoi d'au moins un second paquet RTP (405) comprenant un second paquet MBS (109) et d'une seconde portion d'en-tête (406) contenant un second champ temporel RTP à ladite pluralité de stations de base comprenant ladite première station de base (104) depuis ladite passerelle (102) ;
- le calcul d'un second temps de transmission de paquet MBS par la soustraction dudit second champ temporel RTP dudit premier champ temporel RTP et l'ajout de ladite première estampille temporelle ;
- la comparaison d'au moins un second temps de transmission de paquet MBS avec une pluralité de temps de transmission prédéterminés d'une pluralité de trames DL descendantes comprenant lesdits premier et second temps de transmission prédéterminés desdites première et seconde trames DL, par au moins ladite première station de base (104) pour l'identification d'une correspondance entre l'un desdits temps de transmission prédéterminés de ladite pluralité de trames DL descendantes et ledit second temps de transmission de paquet MBS, par au moins ladite première station de base (104) ;
- l'attribution d'au moins une portion dudit second paquet MBS dans l'une desdites première et seconde trames DL dont ledit temps de transmission prédéterminé correspond sensiblement audit temps de transmission du paquet MBS, par au moins ladite première station de base.

6. Passerelle (102) pour un système sans fil à large bande, ladite passerelle étant adaptée pour recevoir et transmettre un flux de paquets de service de diffusion et multidiffusion MBS depuis un coeur de réseau vers une pluralité de stations de base appartenant à une zone MBS, ladite passerelle (102) comprenant :
- des moyens pour recevoir au moins un premier paquet MBS (107) appartenant audit flux de paquets MBS pour la transmission à ladite zone MBS depuis ledit coeur de réseau (101) ;
- des moyens pour recevoir au moins un premier paquet de synchronisation (201) contenant une première estampille temporelle (202) depuis un serveur MBS (103), ladite première estampille temporelle (202) étant une addition d'une référence temporelle et d'un décalage temporel, ledit décalage temporel étant un retard temporel maximal entre ledit serveur MBS (103) et une première station de base (104) de ladite pluralité de stations de base ; et
- des moyens pour envoyer au moins ledit premier paquet MBS (107) et au moins ledit premier paquet de synchronisation (201) à ladite pluralité de stations de base comprenant ladite première station de base (104) pour une comparaison d'au moins ledit premier temps de transmission de paquet MBS avec une pluralité de temps de transmission prédéterminés d'une pluralité de trames DL descendantes comprenant un premier temps de transmission prédéterminé d'une première trame DL pour l'identification d'une correspondance entre l'un desdits temps de transmission prédéterminés de ladite pluralité de trames DL descendantes et ledit premier temps de transmission de paquet MBS ;
**caractérisée en ce que** les moyens d'envoi sont adaptés pour envoyer le premier paquet MBS (107) et le premier paquet de synchronisation (201) en paquets séparés à la pluralité de stations de base.

7. Station de base pour un système sans fil à large bande, ladite station de base étant adaptée pour recevoir et transmettre un flux de paquets de service de diffusion et multidiffusion MBS à au moins une portion d'une zone MBS, ladite station de base comprenant :
- des moyens pour recevoir au moins un premier paquet MBS (107) et au moins un premier paquet de synchronisation (201) depuis une passerelle (102) ;
- des moyens pour comparer au moins ledit premier temps de transmission de paquet MBS avec une pluralité de temps de transmission prédéterminés d'une pluralité de trames DL descendantes comprenant un premier temps de transmission prédéterminé d'une première trame DL pour l'identification d'une correspondance entre l'un desdits temps de transmission prédéterminés de ladite pluralité de trames DL descendantes et ledit premier temps de transmission de paquet MBS ; et
- des moyens pour attribuer au moins une portion dudit premier paquet MBS (107) dans une première trame DL descendante dont ledit premier temps de transmission prédéterminé correspond audit premier temps de transmission de paquet MBS, **caractérisée en ce que** les moyens de réception sont adaptés pour recevoir le premier paquet MBS (107) et le premier paquet de synchronisation (201) en paquets séparés depuis la passerelle (102).

8. Station de base selon la revendication 7, dans laquelle ledit premier paquet de synchronisation (201) comprend en outre un premier numéro de séquence dudit premier paquet MBS, ladite station de base comprenant en outre :
- des moyens pour recevoir au moins un second paquet de synchronisation (302) et au moins un second paquet MBS (109) depuis ladite passerelle (102), ledit second paquet de synchronisation contenant une seconde estampille temporelle et un second numéro de séquence dudit second paquet MBS (109) ;
- des moyens pour comparer au moins un second temps de transmission de paquet MBS avec une pluralité de temps de transmission prédéterminés d'une pluralité de trames DL descendantes comprenant lesdits premier et second temps de transmission prédéterminés desdites première (108) et seconde trames DL pour l'identification d'une correspondance entre l'un desdits temps de transmission prédéterminés de ladite pluralité de trames DL descendantes et ledit second temps de transmission de paquet MBS, par au moins ladite première station de base ;
- des moyens pour attribuer au moins une portion dudit second paquet MBS dans l'une desdites première et seconde trames DL dont ledit temps de transmission prédéterminé correspond sensiblement audit temps de transmission du paquet MBS.

9. Station de base selon la revendication 7, dans laquelle ledit premier paquet de synchronisation comprend en outre : une première portion d'en-tête d'un premier paquet RTP et une information d'identification d'un en-tête IP et UDP dudit flux de paquets MBS, ladite première portion d'en-tête contenant un premier champ temporel RTP, ledit premier paquet RTP contenant au moins ledit premier paquet MBS.

10. Station de base selon la revendication 9, comprenant en outre :
- des moyens pour recevoir au moins un second paquet RTP comprenant un second paquet MBS (112) et une seconde portion d'en-tête contenant un second champ temporel RTP depuis ladite passerelle ;
- des moyens pour calculer un second temps de transmission de paquet MBS par la soustraction dudit second champ temporel RTP dudit premier champ temporel RTP et l'ajout de ladite première estampille temporelle ;
- des moyens pour comparer au moins un second temps de transmission de paquet MBS avec une pluralité de temps de transmission prédéterminés d'une pluralité de trames DL descendantes comprenant lesdits premier et second temps de transmission prédéterminés desdites première et seconde trames DL pour l'identification d'une correspondance entre l'un desdits temps de transmission prédéterminés de ladite pluralité de trames DL descendantes et ledit second temps de transmission de paquet MBS, par au moins ladite première station de base ;
- des moyens pour attribuer au moins une portion dudit second paquet MBS (109) dans l'une desdites première et seconde trames DL dont ledit temps de transmission prédéterminé correspond sensiblement audit temps de transmission de paquet MBS.
